# EUROPÄISCHE PATENTANMELDUNG

(11) **EP 0 698 847 A1**
(43) Veröffentlichungstag der Anmeldung: **28.02.1996**
(21) Anmeldenummer: 95112641.6
(22) Anmeldetag: 11.08.1995
(51) Int. Cl.: G06F 9/445

(54) **Verfahren für einen Programmpaketaustausch in einem Mehrrechnersystem und Rechner dafür**

(30) Priorität: 24.08.1994 DE 4429969
(71) Anmelder: Alcatel SEL Aktiengesellschaft, D-70435 Stuttgart (DE)
(72) Erfinder: Urban, Hans-Jürgen, D-71287 Weissach (DE)
(74) Vertreter: Schätzle, Albin, Dipl.-Phys.

(57) **Zusammenfassung**

Es ist ein Verfahren für einen Programmpaketeaustausch in einem Mehrrechnersystem (MRS) und ein Rechner (PR1) für das Mehrrechnersystem (MRS) anzugeben. Bei dem Programmpaketeaustausch ist die Unterbrechungszeit der von dem Mehrrechnersystem (MRS) gesteuerten Prozesse so gering wie möglich zu halten. Außerdem ist aus Sicherheitsgründen eine Rückfallmöglichkeit auf den Betrieb des Mehrrechnersystems (MRS) mit dem ausgetauschten, alten Programmpaket vorzusehen.

Erfindungsgemäß hat jeder Rechner (PR1, ..., PRN, SR) des Mehrrechnersystems (MRS) in seinem Arbeitsspeicher (RAM1) einen Bereich (PPN), in den vor Beginn der eigentlichen Austauschprozedur das auszutauschende, neue Programmpaket abgespeichert wird. Bei dem Programmpaketeaustausch wird jeder Rechner (PR1, ..., PRN, SR) aus seinem Arbeitsspeicher (RAM1) mit dem neuen Programmpaket geladen.

## Beschreibung

Die vorliegende Erfindung betrifft ein Verfahren für einen Programmpaketeaustausch in einem Mehrrechnersystem gemäß dem Oberbegriff des Patentanspruchs 1 und einen Rechner für das Mehrrechnersystem gemäß dem Oberbegriff des Patentanspruchs 11.

Ein solches Mehrrechnersystem ist aus dem Aufsatz "System 12, Technische Erweiterungen" von R. Cohen in Elektrisches Nachrichtenwesen Bd. 59, Nr. 1/2, 1985 Seiten 29-34 bekannt. In dem dort beschriebenen Mehrrechnersystem sind mehrere Peripherierechner, die jeweils eine Modulsteuereinheit für ein Anschlußmodul darstellen und jeweils eine Verbindung zu einem Digital-Koppelnetz haben, das die Funktion eines Rechnerkommunikationsnetzes erfüllt, offenbart. Eine Funktionssteuereinheit, die ebenfalls mit dem Digital-Koppelnetz verbunden ist, entspricht einem Systemrechner.

Bei einem Austausch eines Programmpakets wird ein neues Programmpaket von dem Systemrechner über das Rechnerkommunikationsnetz in die Peripherierechner kopiert. Die Peripherierechner und der Systemrechner besitzen dazu jeweils neben einer Steuervorrichtung einen Speicher. Die Peripherierechner sind paarweise angeordnet, so daß der Austausch von Programmpaketen ohne Systemunterbrechung ausgeführt werden kann.

In dem Aufsatz "System 12, Änderungsfreundliche Systemstruktur" von R.H. Manger, Seiten 35-42 der gleichen Ausgabe des Elektrischen Nachrichtenwesens wird genauer auf den Austausch von Programmpaketen bei der paarweisen Anordnung der Peripherierechner eingegangen. Zunächst wird dafür gesorgt, daß der eine der paarweise angeordneten Peripherierechner die Zuständigkeit für die Aufgaben beider Peripherierechner übernimmt. Anschließend wird das neue Programmpaket in den anderen der paarweise angeordneten Peripherierechner geladen und dieser übernimmt die Zuständigkeit für die Aufgaben beider Peripherierechner. Nun wird das neue Programmpaket in dem einen der paarweise angeordneten Peripherierechner geladen und nach erfolgreichem Abschluß des Programmpaketeaustausches können beide Peripherierechner ihre ursprünglichen Aufgaben wieder selbständig übernehmen.

Ein ähnliches Verfahren wird in der Patentschrift DE 41 34 207 für ein Doppelrechnersystem beschrieben. Ein passiver Rechner wird von einer externen Eingabevorrichtung über einen aktiven Rechner mit dem neuen Programmpaket geladen und anschließend gestartet. Läuft das neue Programmpaket in dem passiven Rechner fehlerlos, dann wird er in einen aktiven Zustand und ein vorher aktiver Rechner in einen passiven Zustand geschaltet. Danach wird der nun passive Rechner von dem nun aktiven Rechner mit dem neuen Programmpaket geladen. Treten während des Betriebes Fehler auf, so bestehen die Möglichkeiten, auf das alte Programmpaket zurückzufallen oder das Laden mit dem neuen Programmpaket zu wiederholen.

In den oben genannten Druckschriften wird jeweils nur auf den Programmpaketeaustausch bei paarweise vorhandenen Rechnern eingegangen, von denen immer einer zunächst den passiven Zustand einnehmen muß. Dazu muß er bezüglich seiner Programme vom jeweiligen Gesamtsystem isoliert werden. Verzichtet man auf die paarweise Anordnung der (Peripherie) Rechner, so sind beim Programmpaketeaustausch Wartezeiten in Kauf zu nehmen, die in Abhängigkeit von der Anzahl der (Peripherie) Rechner und der Art des Rechnerkommunikationsnetzes lange Unterbrechungszeiten des Gesamtsystems bedeuten können.

Es ist eine Aufgabe der vorliegenden Erfindung eine Unterbrechungszeit bei einem Programmpaketeaustausch in einem Mehrrechnersystem gering zu halten.

Diese Aufgabe wird erfindungsgemäß durch die technische Lehre des Patentanspruchs 1 oder des Patentanspruchs 11 gelöst.

Vorteilhafterweise ist es möglich, in jeder Phase des Programmpaketeaustauschs auf das ausgetauschte alte Programmpaket zurückgreifen zu können.

In einer anderen vorteilhaften Ausgestaltung der Erfindung wird das auszutauschende neue Programmpaket in komprimierter Form in die Arbeitsspeicher der Rechner des Mehrrechnersystems kopiert, so daß kostengünstigere Arbeitsspeicher geringerer Kapazität verwendet werden können.

In einer weiteren vorteilhaften Ausgestaltung der Erfindung kann bei einem Auftreten eines Fehlers während des Programmpaketeaustauschs oder einer vorgebbaren Probezeit entweder auf das alte Programmpaket zurückgegriffen werden oder je nach Art des auftretenden Fehlers ein erneuter Programmpaketeaustauschversuch mit dem neuen Programmpaket in einem oder mehreren der Peripherierechner oder des Systemrechners des Mehrrechnersystems unternommen werden.

Weitere vorteilhafte Ausgestaltungen der Erfindung sind den abhängigen Patentansprüchen zu entnehmen.

Zum besseren Verständnis der Erfindung und ihrer Vorteile werden im folgenden drei Ausführungsbeispiele anhand der Figuren 1 bis 3 beschrieben. Es zeigen:
- Fig. 1: ein Mehrrechnersystem mit einem Ausführungsbeispiel eines erfindungsgemäßen Rechners,
- Fig. 2: ein Ablaufdiagramm eines ersten Ausführungsbeispiels des erfindungsgemäßen Verfahrens und
- Fig. 3: ein Ablaufdiagramm eines zweiten Ausführungsbeispiels des erfindungsgemäßen Verfahrens.

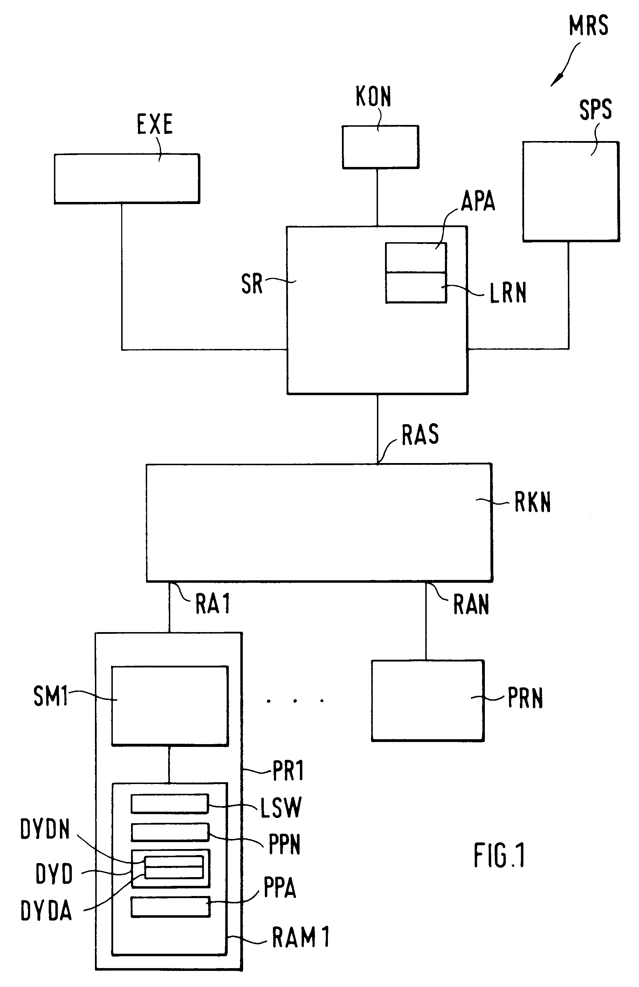

Fig. 1 zeigt das Ausführungsbeispiel eines Mehrrechnersystems MRS. Das Mehrrechnersystem MRS enthält ein Rechnerkommunikationsnetz RKN, an das n Peripherierechner PR1, ..., PRN über zugehörige Anschlüsse RA1, ..., RAN und ein Systemrechner SR über einen Anschluß RAS angeschlossen sind. Das Rechnerkommunikationsnetz RKN kann ein Local Area Network (LAN), ein ATM (Asynchronous Transfer Modus) Hochgeschwindigkeitsdatennetz, ein Digital-Koppelnetz oder ein anderes Rechnerkommunikationsnetz sein, das Daten zwischen den angeschlossenen Peripherie- und Systemrechnern transportieren kann.

Die Peripherierechner PR1, ..., PRN haben im Ausführungsbeispiel den gleichen Aufbau. Stellvertretend wird hier der Aufbau des Peripherierechners PR1 mit seinen die Erfindung betreffenden Komponenten näher beschrieben. Der Peripherierechner PR1 enthält einen Arbeitsspeicher RAM1 und ein Steuermittel SM1. Der Arbeitsspeicher RAM1 ist ein gängiger, handelsüblicher Arbeitsspeicher genügend großer Kapazität, beispielsweise 64 Mbyte, und hat einen ersten Bereich PPA, einen zweiten Bereich DYD, der wiederum in weitere Bereiche DYDA und DYDN unterteilt ist, einen dritten Bereich PPN und einen vierten Bereich LSW. In dem ersten Bereich PPA ist ein altes Programmpaket abgespeichert, mit dem mittels des Steuermittels SM1 die laufenden, von dem ersten Peripherierechner PR1 gesteuerten Prozesse gesteuert werden. Das alte Programmpaket hat ein Kodesegment mit den von dem Steuermittel SM1 auszuführenden Anweisungen, wie beispielsweise ein Betriebssystem und Anwendungsprogramme, und ein Datensegment, in dem Daten abgelegt sind, auf die durch die Anweisungen im Kodesegment zugegriffen wird. In dem Bereich PPA ist auch ein Dateiverwaltungsprogramm abgelegt, das einen dateiorientierten Zugriff, d.h. eine logische Adressierung eines Bereichs eines Programms mit z.B. Namen, auf Anweisungen zum Programmpaketeaustausch ermöglicht. Im Ausführungsbeispiel wird die Dateiverwaltung nach dem POSIX.1-Standard 1003.1-1990 von IEEE 86 vorgenommen. Das Dateiverwaltungsprogramm beinhaltet auch Kopierfunktionen zwischen verschiedenen Datenträgern. Das alte Programmpaket soll durch ein neues Programpaket ausgetauscht werden. Für dieses neue Programmpaket ist in dem Arbeitsspeicher RAM1 der dritte Bereich PPN vorgesehen.

In dem weiteren Bereich DYDA des zweiten Bereichs DYD des Arbeitsspeichers RAM1 werden dynamische Daten der von dem Mehrrechnersystem MRS oder dem Peripherierechner PR1 kontrollierten Prozesse während deren Laufzeit jeweils bei Erreichen einer günstigen Rückfallposition von den Anwendungsprogrammen gesichert. Dazu sind in den Programmpaketen an vorgegebenen Stellen Überprüfungsmarkierungen angebracht, so daß nach einer kurzen Unterbrechung die Prozeßzustände mit den gesicherten dynamischen Daten wiederhergestellt und die Prozesse fortgesetzt werden können. Die Sicherung der dynamischen Daten geschieht häufig aus dem Grund, bei einem Auftreten von Instabilitäten während des normalen Betriebs des Mehrrechnersystems MRS mit dem alten Programmpaket einen Wiederanlauf einzelner Peripherierechner steuern zu können.

Die Überprüfungsmarkierungen können daher hier für den Programmpaketeaustausch genutzt werden. Die dynamischen Daten sind spezifisch für die Prozesse. Sie werden nur wahrend der Lebenszeit der Prozesse benötigt. Ein Beispiel für die dynamischen Daten ist der Startzeitpunkt des Prozesses oder, falls der Prozeß beispielsweise ein Verbindungsaufbau von dem Peripherierechner PR1 zu einem anderen der Peripherierechner PR2, ..., PRN ist, die gewählte Rufnummer und/oder die Identität der für diese Verbindung belegten Betriebsmittel.

Im vierten Bereich LSW ist ein sogenanntes Bootstrapprogramm abgespeichert, das während des Programmpaketeaustauschs jederzeit ein erneutes Laden des alten Programmpakets, das dazu in einem semipermanenten Speicher SPS abgespeichert ist, veranlassen kann. Das Bootstrapprogramm im vierten Bereich LSW befindet sich in einem geschützten Bereich des Arbeitsspeichers RAM1 und kann beim Programmpaketeaustausch nicht überschrieben werden.

Der hier beschriebene Aufbau des Peripherierechners PR1 entspricht weitgehend dem Aufbau des Systemrechners SR. Der Systemrechner SR hat darüberhinaus eine Verbindung zu einer externen Eingabevorrichtung EXE, zu dem semipermanenten Speicher SPS und zu einer Konsole KON, über die eine Bedienperson Eingaben in das Mehrrechnersystem MRS machen kann. Der semipermanente Speicher SPS kann beispielsweise ein gängiges EEPROM, eine Harddisc oder ein sonstiger Speicher genügend großer Kapazität sein, dessen Inhalt überschreibbar ist und der bei Abschalten der Stromversorgung seinen Inhalt behält. Der Arbeitsspeicher des Systemrechners SR hat neben den vier stellvertretend beim Peripherierechner PR1 beschriebenen Bereichen einen fünften Bereich APA und einen sechsten Bereich LRN. In dem fünften Bereich APA ist ein Programm Auftragsbearbeitung Programmpaketeaustausch abgespeichert, mit dessen Hilfe der Systemrechner SR den Programmpaketeaustausch überwacht und Meldungen mit den anderen am Programmpaketeaustausch beteiligten Komponenten des Mehrrechnersystems MRS über das Rechnerkommunikationsnetz RKN austauscht. In dem sechsten Bereich LRN ist ein Ladeprogramm abgespeichert, mit dem Ladeanforderungen aus dem Rechnerkommunikationsnetz RKN, d.h. von dem daran angeschlossenen Peripherierechner PR1, ..., PRN, entgegengenommen und verarbeitet werden. Der Systemrechner SR kann so aus dem semipermanenten Speicher SPS oder der externen Speichervorrichtung EXE die benötigten Informationen abrufen und eine Übertragung zu einem oder mehreren der Peripherierechner PR1, ..., PRN veranlassen.

Während des Programmpaketeaustauschs kann durch dieses Ladeprogramm insbesondere das erneute Laden des im semipermanenten Speicher SPS abgespeicherten alten Programmpaketes beim Auftreten eines Fehlers gewährleistet werden.

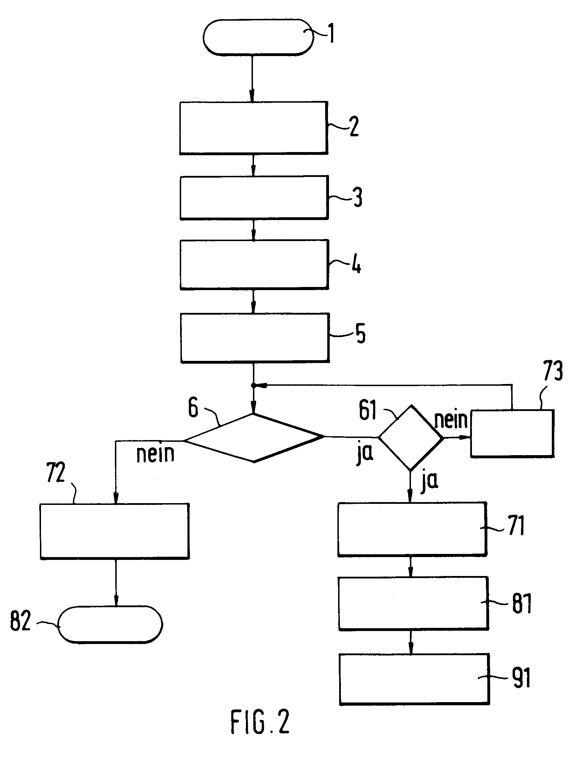

Fig. 2 zeigt das Ablaufdiagramm des ersten Ausführungsbeispiels des erfindungsgemäßen Verfahrens. In einem Schritt 1 wird das Mehrrechnersystem MRS als Ausgangsposition für den Programmpaketeaustausch zu Beginn mit dem alten Programmpaket betrieben. Das alte Programmpaket befindet sich dazu in dem ersten Bereich PPA der Arbeitsspeicher der Peripherierechner PR1, ..., PRN, des Systemrechners SR und in dem semipermanenten Speicher SPS. Das neue Programmpaket befindet sich auf einem Datenträger in der externen Eingabevorrichtung EXE. Nach der Eingabe des Befehls zum Programmpaketeaustausch durch die Bedienperson an der Konsole KON des Systemrechners SR wird in einem Schritt 2 während einer Vorbereitungszeit das neue Programmpaket von dem Datenträger in der externen Eingabevorrichtung EXE in den Arbeitsspeicher des Systemrechners SR1 und über das Rechnerkommunikationsnetz in die Arbeitsspeicher der Peripherierechner PR1, ..., PRN kopiert. Das neue Programmpaket wird in die dritten Bereiche PPN der Arbeitsspeicher abgespeichert. Der Kopiervorgang erfolgt mit Hilfe des in den ersten Bereichen PPA der Peripherierechner PR1, ..., PRN und des Systemrechners SR vorhandenen Dateiverwaltungsprogramms.

Während des Kopiervorgangs laufen die von dem Mehrrechnersystem MRS gesteuerten Prozesse mit dem alten Programmpaket weiter. In einem nächsten Schritt 3 wird die Aufforderung zum Programmpaketeaustausch an alle Peripherierechner PR1, ..., PRN und den Systemrechner SR gleichzeitig verteilt. In einem Schritt 4 wird daraufhin in jedem der Peripherierechner PR1, ..., PRN und in dem Systemrechner SR die Kontrolle der laufenden Prozesse unterbrochen, die - wie bereits oben beschrieben - in dem Bereich DYDA des zweiten Bereiches DYD gesicherten dynamischen Daten in den weiteren Bereich DYDN des zweiten Bereiches DYD kopiert und damit die Voraussetzung für einen Wiederanlauf aller von dem Mehrrechnersystem MRS kontrollierten Prozesse mit den gesicherten dynamischen Daten geschaffen.

In einem Schritt 5 wird anschließend das neue Programmpaket in den dritten Bereichen PPN der Arbeitsspeicher mit den in den weiteren Bereichen DYDN der zweiten Bereiche DYD gesicherten dynamischen Daten initialisiert. Den Variablen des neuen Programmsystems werden Werte zugewiesen. Es müssen eventuell Strukturänderungen der gesicherten dynamischen Daten für die Initialisierung mit dem neuen Programmpaket berücksichtigt werden. Ist das der Fall, dann sind die dynamischen Daten beim Kopieren von dem Bereich DYDA in den Bereich DYDN der zweiten Bereiche DYD umzuformatieren. Anschließend erfolgt eine Rückmeldung der durchgeführten Initialisierung von den Peripherierechnern PR1, ..., PRN an den Systemrechner SR. Während dieser Verfahrensschritte bleibt das alte Programmsystem weiterhin in dem semipermanenten Speicher SPS und den ersten Bereichen PPA abgespeichert. Das Mehrrechnersystem MRS läuft nun mit dem neuen Programmpaket und kontrolliert die unterbrochenen Prozesse. In einem Schritt 6 wird eine Probezeit vorgegeben und überprüft, ob es während der Verfahrensschritte oder in der Probezeit zu Instabilitäten oder Fehlermeldungen beim Betrieb des Mehrrechnersystems MRS mit dem neuen Programmpaket kommt. Ist dies der Fall, dann wird in einem Schritt 61 überprüft, ob die auftretende Fehlermeldung das gesamte Mehrrechnersystem MRS betrifft. Trifft dies zu, dann wird in einem Schritt 71 erneut, wie schon im Schritt 3, die Aufforderung zum Programmpaketeaustausch an alle Peripherierechner PR1, ..., PRN und an den Systemrechner SR verteilt. In einem Schritt 81 werden die dynamischen Daten der von dem Mehrrechnersystem kontrollierten Prozesse von dem Bereich DYDN in den Bereich DYDA in dem zweiten Bereich DYD der Arbeitsspeicher kopiert und in einem Schritt 91 das weiterhin in dem ersten Bereich PPA der Arbeitsspeicher abgespeicherte alte Programmpaket mit den dynamischen Daten initialisiert. In dem Beispiel wird vorausgesetzt, daß die Struktur der dynamischen Daten in den Bereichen DYDA und DYDN gleich sein muß. Andernfalls ist entsprechend umzuformatieren. Ein erneuter Versuch, den Programmpaketeaustausch mittels des erfindungsgemäßen Verfahrens durchzuführen, kann vorgenommen werden.

Betrifft die auftretende Fehlermeldung nicht das gesamte Mehrrechnersystem, sondern nur einzelne Peripherierechner PR1, ..., PRN oder den Systemrechner SR, dann kann das erfindungsgemäße Verfahren in Abhängigkeit von dem auftretenden Fehler so abgewandelt werden, daß nach dem Schritt 61 statt der Schritte 71 bis 91 in einem Schritt 73 das neue Programmpaket in dem dritten Bereich PPN der Arbeitsspeicher dieser Peripherierechner PR1, ..., PRN oder des Systemrechners SR erneut mit den dynamischen Daten initialisiert wird. Nach dem Schritt 73 folgt anschließend erneut der Schritt 6. Treten keine Fehlermeldungen oder Instabilitäten auf, so wird das neue Programmpaket in einem Schritt 72 nach der Probezeit in den semipermanenten Speicher SPS kopiert. Das alte Programmpaket im semipermanenten Speicher SPS wird dabei gelöscht. In einem Schritt 82 ist das erfindungsgemäße Verfahren beendet und das Mehrrechnersystem MRS wird stabil mit dem neuen Programmpaket betrieben.

In einer weiteren Ausführung der Erfindung ist es möglich, das neue Programmpaket in komprimierter Form von dem Datenträger in der externen Eingabevorrichtung EXE in die dritten Bereiche PPN der Arbeitsspeicher der Peripherierechner PR1, ..., PRN und des Systemrechners SR zu kopieren. Kompression bedeutet dabei beispielsweise, daß Bits blockweise zusammengefaßt werden, sofern sie den gleichen Wert haben. Ist also Speicheradresse 100 bis Speicheradresse 200 ausschließlich mit dem Bit "1" belegt, so komprimiert man: von Speicheradresse 100 bis Speicheradresse 200 25 mal F (hexadezimal, entspricht binär 1111). Auf diese Weise kann Speicherkapazität gespart werden. Generell sind auch andere Kompressionsverfahren anwendbar.

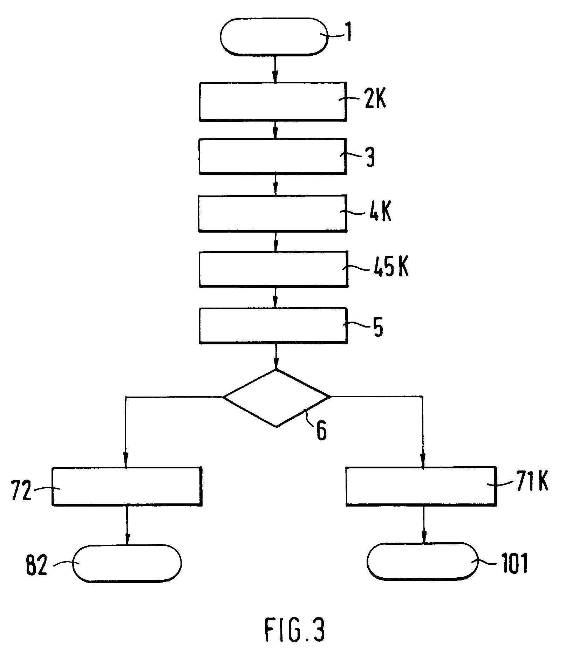

Das zweite Ausführungsbeispiel des erfindungsgemäßen Verfahrens zeigt Fig. 3. In der Beschreibung und in der Fig. 3 werden für gleiche oder gleichwirkende Schritte im folgenden durchweg gleiche Bezugszeichen verwendet. Im zweiten Ausführungsbeispiel wird das neue Programmpaket in komprimierter Form in die Arbeitsspeicher der Peripherierechner PR1, ..., PRN und des Systemrechners SR kopiert und erst in den Arbeitsspeichern dekomprimiert. Dies hat den Vorteil, daß Arbeitsspeicher mit kleinerer Kapazität als im ersten Ausführungsbeispiel verwendet werden können. Das zweite Ausführungsbeispiel beginnt mit dem Schritt 1, wie er bereits in dem ersten Ausführungsbeispiel des erfindungsgemäßen Verfahrens anhand von Fig. 2 beschrieben wurde. Darauf folgte ein Schritt 2K, in dem das neue Programmpaket in komprimierter Form von der externen Eingabevorrichtung EXE in die dritten Bereiche PPN der Arbeitsspeicher der Peripherierechner PR1, ..., PRN und des Systemrechners SR kopiert wird. Der folgende Schritt 3 entspricht dem des ersten Ausführungsbeispiels. Der zweite Bereich DYD ist in diesem Ausführungsbeispiel nicht unterteilt. In einem Schritt 4K erfolgt die Unterbrechung der laufenden Prozesse und eine Umformatierung der gesicherten dynamischen Daten. Die Umformatierung entfällt, wenn sich die Struktur der dynamischen Daten nicht geändert hat. Vor dem Initialisieren des neuen Programmpakets mit den dynamischen Daten in dem Schritt 5 wird das nun komprimiert in den dritten Bereichen PPN abgespeicherte neue Programmpaket in einem auf den Schritt 4K folgenden Schritt 45K dekomprimiert und in die ersten Bereiche PPA der Arbeitsspeicher der Peripherierechner PR1, ..., PRN überschrieben. Das zunächst in diesen ersten Bereichen PPA abgespeicherte alte Programmpaket wird dabei gelöscht. Kommt es während der Verfahrensschritte oder der Probezeit im Schritt 6 zu Instabilitäten oder Fehlermeldungen, dann sendet der Peripherierechner PR1, ..., PRN, der den Fehler wahrnimmt, in einem Schritt 71K über das Rechnerkommunikationsnetz RKN eine Ladeanforderung zum erneuten Laden des alten Programmpaketes zu dem Systemrechner SR. Dieser erkennt mittels des im sechsten Bereich LRN seines Arbeitsspeichers abgespeicherten Ladeprogramms diese Ladeanforderung und veranlaßt ein Laden des im semipermanenten Speicher SPS abgespeicherten alten Programmpakets in die Arbeitsspeicher der Peripherierechner PR1, ..., PRN und in seinen eigenen Arbeitsspeicher. Das alte Programmpaket ist in komprimierter Form in dem semipermanenten Speicher SPS abgespeichert. Laden bedeutet daher in dem hier beschriebenen Ausführungsbeispiel das Dekomprimieren des Programmpakets und das Initialisieren mit den gesicherten dynamischen Daten. In dem folgenden Schritt 101 wird schließlich das Mehrrechnersystem MRS erneut mit dem alten Programmsystem betrieben. Treten keine Fehlermeldungen im Schritt 6 auf, so folgen, wie im ersten Ausführungsbeispiel, die Schritte 72 und 82.

Ist die Kapazität des sempipermanenten Speichers SPS groß genug, um sowohl das alte als auch das neue Programmpaket abspeichern zu können, dann wird das neue Programmpaket in dem Schritt 2K während der Vorbereitungszeit in komprimierter Form auch in dem semipermanenten Speicher SPS ein Laden des im semipermanenten Speicher SPS abgespeicherten alten Programmpakets. Treten nun Fehlermeldungen oder Instabilitäten auf, so kann der Systemrechner SR anhand der über das Rechnerkommunikationsnetz RKN eingehenden Ladeanforderungen der Peripherierechner PR1, ..., PRN entscheiden, ob das gesamte Mehrrechnersystem MRS erneut mit dem alten Programmpaket ein Laden des im semipermanenten Speicher SPS abgespeicherten alten Programmpakets wird oder ob ein oder mehrere der Peripherierechner PR1, ..., PRN oder der Systemrechner SR selbst, falls die Fehlermeldung ihn betrifft, erneut mit dem neuen Programmpaket ein Laden des im semipermanenten Speicher SPS abgespeicherten alten Programmpakets werden. Damit kann auf unterschiedliche Fehler beim Programmpaketeaustausch flexibler reagiert werden.

Das neue Programmpaket kann sowohl ein komplettes Betriebsssystem samt Anwenderprogrammen als auch nur Teile davon sein. Da durch das erfindungsgemäße Verfahren bei allen Peripherierechnern PR1, ..., PRN und dem Systemrechner SR der Programmpaketeaustausch gleichzeitig durchgeführt wird, ist eine Schnittstellen- und Zeitkompatibilität des neuen Programmpaketes mit dem alten Programmpaket nicht erforderlich.

## Patentansprüche

1. Verfahren für einen Programmpaketeaustausch eines alten Programmpakets durch ein neues Programmpaket in einem Mehrrechnersystem (MRS), das eine Vielzahl von Peripherierechnern (PR1, ..., PRN) und wenigstens einen Systemrechner (SR) hat und bei dem die Peripherierechner (PR1, ..., PRN) und der wenigstens eine Systemrechner (SR) jeweils mit einem Rechnerkommunikationsnetz (RKN) verbunden sind und jeweils einen Arbeitsspeicher (RAM1) haben,
**gekennzeichnet durch** die folgenden, in jedem der Peripherierechner (PR1, ..., PRN) und dem wenigstens einen Systemrechner (SR) durchzuführenden Verfahrensschritte:
- Kopieren des neuen Programmpakets in einen ersten Bereich (PPN) der Arbeitsspeicher (RAM1) der Peripherierechner (PR1, ..., PRN) und des wenigstens einen Systemrechners (SR),
- Sichern von dynamischen Daten der von dem Mehrrechnersystem (MRS) kontrollierten Prozesse in einem zweiten Bereich (DYD) der jeweiligen Arbeitsspeicher (RAM1) bei Erreichen einer geeigneten Rückfallposition,
- Initialisieren des neuen Programmpakets in den Peripherierechnern (PR1, ..., PRN) und dem wenigstens einen Systemrechner (SR) mit den gesicherten dynamischen Daten.

2. Verfahren nach Anspruch 1,
dadurch gekennzeichnet, daß die von dem Mehrrechnersystem (MRS) mittels des alten Programmpakets kontrollierten Prozesse vor dem Initialisieren des neuen Programmpakets mit den gesicherten dynamischen Daten unterbrochen werden.

3. Verfahren nach Anspruch 1,
dadurch gekennzeichnet, daß der wenigstens eine Systemrechner (SR) mit einer externen Eingabevorrichtung (EXE) verbunden ist und das neue Programmpaket von der externen Eingabevorrichtung (EXE) in den Arbeitsspeicher des wenigstens einen Systemrechners (SR) kopiert wird und
daß das neue Programmpaket mittels des wenigstens einen Systemrechners (SR) über das Rechnerkommunikationsnetz (RKN) zu den Peripherierechnern (PR1, ..., PRN) übertragen und in die Arbeitsspeicher (RAM1) der Peripherierechner (PR1, ..., PRN) kopiert wird.

4. Verfahren nach Anspruch 1,
dadurch gekennzeichnet, daß der wenigstens eine Systemrechner (SR) mit einem semipermanenten Speicher (SPS) verbunden ist, in dem das alte Programmpaket abgespeichert ist.

5. Verfahren nach Anspruch 4,
dadurch gekennzeichnet, daß das neue Programmpaket nach Ablauf einer vorgegebenen Probezeit nach dem Programmpaketeaustausch und fehlerfreiem Betrieb des Mehrrechnersystems (MRS) mit dem neuen Programmpaket in den semipermanenten Speicher (SPS) kopiert wird.

6. Verfahren nach Anspruch 1,
dadurch gekennzeichnet, daß das alte Programmpaket bei Auftreten eines Fehlers während einer vorgegebenen Probezeit erneut in den Peripherierechnern (PR1, ..., PRN) und dem wenigstens einen Systemrechner (SR) mit den gesicherten dynamischen Daten initialisiert wird.

7. Verfahren nach Anspruch 1,
dadurch gekennzeichnet, daß das neue Programmpaket in komprimierter Form in den ersten Bereich (PRN) der Arbeitsspeicher (RAM1) der Peripherierechner (PR1, ..., PRN) und des wenigstens einen Systemrechners (SR) kopiert wird und
daß das komprimierte neue Programmpaket vor dem Initialisieren mit den dynamischen Daten dekomprimiert wird und dabei das alte Programmpaket in den Arbeitsspeichern (RAM1) überschrieben wird.

8. Verfahren nach Anspruch 4 und 7,
dadurch gekennzeichnet, daß das alte Programmpaket bei Auftreten eines Fehlers während einer vorgegebenen Probezeit aus dem semipermanenten Speicher (SPS) in den wenigstens einen Systemrechner (SR) und über das Rechnerkommunikationsnetz (RKN) in die Peripherierechner (PR1, ..., PRN) geladen wird.

9. Verfahren nach Anspruch 7,
dadurch gekennzeichnet, daß die Kapazität des semipermanenten Speichers (SPS) genügend groß ist, um sowohl das alte als auch das neue Programmpaket speichern zu können, so daß das neue Programmpaket im ersten Verfahrensschritt zusätzlich in den semipermanenten Speicher (SPS) kopiert werden kann, ohne das alte Programmpaket oder Teile davon löschen zu müssen.

10. Verfahren nach Anspruch 9,
dadurch gekennzeichnet, daß bei Auftreten eines Fehlers während des Programmpaketeaustauschs oder während einer vorgegebenen Probezeit in dem wenigstens einen Systemrechner (SR) entschieden wird, ob das gesamte Mehrrechnersystem (MRS) erneut mit dem im semipermanenten Speicher (SPS) abgespeicherten, alten Programmpaket geladen wird oder ob einer oder mehrere der Peripherierechner (PR1, ..., PRN) und/oder der wenigstens eine Systemrechner (SR) erneut mit dem im semipermanenten Speicher (SPS) abgespeicherten, neuen Programmpaket geladen werden.

11. Rechner (PR1) mit einem Anschluß (RA1) an ein Rechnerkommunikationsnetz (RKN) eines Mehrrechnersystems (MRS) und mit einem Arbeitsspeicher (RAM1),
dadurch gekennzeichnet, daß er ein Steuermittel (SM1) hat, das bei einem Austausch eines alten Programmpakets durch ein neues Programmpaket ein Kopieren des neuen Programmpaketes in einen ersten Bereich (PPN) des Arbeitsspeichers (RAM1), ein Sichern von dynamischen Daten der von dem Mehrrechnersystem (MRS) kontrollierten Prozesse bei Erreichen einer geeigneten Rückfallposition in einem zweiten Bereich (DYD) des Arbeitsspeichers (RAM1) und ein Initialisieren des neuen Programmpakets mit den gesicherten dynamischen Daten in dem Rechner (PR1) steuert.

12. Rechner nach Anspruch 11,
dadurch gekennzeichnet, daß das Steuermittel (SM1) das Kopieren des neuen Programmpakets in komprimierter Form in den ersten Bereich (PPN) des Arbeitsspeichers (RAM1) und ein Dekomprimieren des komprimierten neuen Programmpakets vor dem Initialisieren mit den gesicherten dynamischen Daten steuert.
